## Europäisches Patentamt

## European Patent Office

## Office européen des brevets

(19)

(11) Veröffentlichungsnummer: **0 057 279**
**A2**

(12)

# EUROPÄISCHE PATENTANMELDUNG

(21) Anmeldenummer: **81110394.4**

(22) Anmeldetag: **12.12.81**

(51) Int. Cl.³: **B 32 B 27/08**

(30) Priorität: **31.01.81 DE 3103304**

(43) Veröffentlichungstag der Anmeldung: **11.08.82**
**Patentblatt 82/32**

(84) Benannte Vertragsstaaten: **AT BE CH DE FR GB IT LI LU NL SE**

(71) Anmelder: **DYNAMIT NOBEL AKTIENGESELLSCHAFT, Patentabteilung Postfach 1209, D-5210 Troisdorf, Bez. Köln (DE)**

(72) Erfinder: **Kautz, Rudolf, Drosselweg 5, D-5202 Hennef 1 (DE)**
Erfinder: **Jaeschke, Hans, Siegstrasse 99, D-5205 St. Augustin 3 (DE)**

(54) **Identifikationskarte aus Kunststoff.**

(57) Identifikationskarte aus Kunststoff oder kunststofflaminiertem Werkstoff aus PVC Hart bzw. PVCA mit einer fluorhaltigen thermoplastischen Kunststoffschutzschicht.

**EP 0 057 279 A2**

Troisdorf, den 27. Jan. 1981
OZ 81oo7   MG/Bd

DYNAMIT NOBEL AKTIENGESELLSCHAFT
Troisdorf, Bez. Köln

Identifikationskarte aus Kunststoff

Die Erfindung betrifft eine Identifikationskarte aus Kunststoff oder kunststofflaminiertem Werkstoff, wobei der Kunststoff Polyvinylchlorid-hart und/oder weichmacherfreie Vinylchlorid-Vinylacetat-Copolymere sind, die ggf. einen Magnetstreifen, Öffnungen in der Kunststoffschicht bzw. ein papierenes Unterschriftenfeld aufweist. Die Anforderungen an Identifikationskarten wie sie für Büro- und Datentechnik vielfach eingesetzt werden, sind beispielsweise in dem deutschen Normenentwurf DIN 9781, Teil 1, vom April 198o und in der ISO-Norm 2894 von 1974 festgelegt. Die Identifikationskarten können als Ausweis zur Identifizierung eines Inhabers oder Berechtigungskarten dienen, die dem Inhaber ermöglichen, bestimmte Leistungen in Anspruch zu nehmen. Die Identifikationskarten müssen bestimmten Dimensionen genügen sowie bestimmten mechanischen Anforderungen. Üblicherweise werden Identifikationskarten als Verbundkörper hergestellt, wobei eine Papier- oder Kunststoffschicht beidseitig mit Kunststoffschichten laminiert ist, wobei insbesondere transparentes PVC-hart oder weichmacherfreie Vinylchlorid-Vinylacetat-Copolymere sich für die Kunststoffschichten bewährt haben.

Auch in der DE-AS 28 17 3o9 sind als Verbundkörper ausgebildete Identifikationskarten beispielsweise beschrieben.

Ein Nachteil von Kunststoffschichten aus PVC-hart oder weichmacherfreien PVCA ist die Tatsache, daß sie bei engem Kontakt zu weichmacherhaltigen Werkstoffen, beispielsweise Weich-PVC, eine Weichmacherwanderung unterliegen die zu Spannungsrissen in den äußeren Kunststoffschichten der Identifikationskarte und zu weiteren Veränderungen führen, die zusammen auch mit anderen Einflüssen wie Handschweiß, die Lebensdauer der Identifikationskarte sehr verkürzen.

Der Erfindung liegt die Aufgabe zugrunde, die bekannten Identifikationskarten gegen äußere Einflüsse, insbesondere Weichmachereinwanderung zu schützen und damit die Eigenschaften, Funktionstüchtigkeit und Lebensdauer der Identifikationskarte zu erhöhen.

Diese Aufgabe wird erfindungsgemäß durch eine Identifikationskarte gelöst, bei der auf die Außenflächen des Kunststoffes eine fluorhaltige thermoplastische Kunststoffschicht einer Dicke von lo bis 5o $\mu$m, vorzugsweise lo bis 25 $\mu$m aufgebracht ist. Mit dieser erfindungsgemäßen Schutzschicht gelingt es, den Angriff von Weichmacher von außen auf die Identifikationskarte abzuwehren, um das Auftreten von Spannungsrissen in den äußeren Kunststoffschichten der Identifikationskarte zu verhindern, die Transparenz und Lesbarkeit der Identifikationskarte zu erhalten. Die erfindungsgemäße Schutzschicht wird aus einem fluorhaltigen thermoplastischem Kunststoff, vorzugsweise Polyvinylfluorid oder Polyvinylidenfluorid gewählt, der eine gute Witterungsstabilität, eine sehr gute Beständigkeit gegenüber Chemikalien, eine Weichmachersperrwirkung, geringe Spannungsrißneigung und geringe Wasseraufnahme zeigt.

Überraschend hat sich herausgestellt, daß der erfindungsgemäße Aufbau einer Identifikationskarte eine höhere Maßhaltigkeit gegenüber Identifikationskarten nur aus PVC-Hart oder weichmacherfreien PVCA aufweist. Wichtig ist insbesondere, daß auch der Verbund glasklar transparent ist, um die erforderliche auch maschinelle Lesbarkeit der Identifikationskarte zu ermöglichen. Neben den bevorzugt eingesetzten fluorhaltigen thermoplastischen Kunststoffen, kommen jedoch auch fluorhaltige thermoplastische Kunststoffe wie Äthylen tetrafluoräthylen-Copolymere oder Tetrafluoräthylenperfluorpropylen in Frage.

Es sei darauf hingewiesen, daß an sich die gute chemische Beständigkeit und Witterungsbeständigkeit fluorhaltiger thermoplastischer Kunststoffe seit langem bekannt ist und aus diesem Grunde diese fluorhaltigen thermoplastischen Kunststoffe bereits vielfach als Verbundwerkstoff eingesetzt werden, wozu beispielsweise auf Verbundverpackungsfolien nach der schweizer Patentschrift 48o 242, weitere Verbundmaterialien für den Apparatebau nach der DE-OS 28 o8 87o, DE-OS 29 38 462 und beispielsweise DE-OS 27 15 185 hingewiesen wird. Ein Hinweis auf die der Erfindung zugrundeliegende Problematik der Verhinderung von Weichmachereinwanderung und Erhaltung der Transparenz und Eigenschaften des PVC bei Identifikationskarten ist jedoch dem Stand der Technik nicht entnehmbar. Es ist auch zu beachten, daß es zahlreiche andere auch witterungsbeständige und chemisch gut beständige Kunststoffe mit mechanisch guten Eigenschaften gibt,wie beispielsweise Polyester, die sich dennoch nicht für den erfindungsgemäßen Anwendungsbereich für Identifikationskarten einsetzen lassen. Für Polyester gilt insbesondere, daß diese Folien sich nicht mit den bekannten Identifikationskarten-Materialien wie PVC und PVCA kaschieren lassen und keine genügende Haftfestigkeit erzielbar ist.

Eine bevorzugte Ausführung der erfindungsgemäßen Identifikationskarte sieht vor, daß die fluorhaltige thermoplastische Kunststoffschicht als Film ausgebildet und mittels einer haftvermittelnden Klebeschicht auf Basis von Acrylatharzen mit dem Kunststoff vollflächig haftfest verbunden ist. Beispielsweise kommen sehr dünne Polyvinylfluoridfolien hierfür in Frage, die zäh sind, eine hohe chemische Resistenz und Temperaturbeständigkeit aufweisen und das Eindringen von Fremdstoffen und Weichmachern in die Kunststoffschicht beispielsweise aus Hart-PVC der Identifikationskarte verhindern. Weichmacher aus Weich-PVC beispielsweise, Handschweiß und auch Kosmetika sind unangenehme spannungsrißauslösende Medien beispielsweise für Hart-PVC und PVCA. Überraschend ist auch, daß die fluorhaltigen thermoplastischen dünnen Kunststoffschichten die Spannungsrißunempfindlichkeit der so ausgerüsteten Identifikationskarte erhöhen.

Der Kleber zum Verbinden der thermoplastischen fluorhaltigen Kunststoffschicht mit der vorhandenen Kunststoffschicht der Identifikationskarte kann aus der Lösung aufgebracht werden. Es können auch geeignete Kleber auf Basis anderer Thermoplaste eingesetzt werden. Bevorzugt werden heißsiegelfähige Kleber, die in der Wärme aktivierbar sind, verwendet.

In der beigefügten Zeichnung ist die Erfindung schematisch dargestellt.

0057279

Figur 1   zeigt in Seitenansicht den Aufbau der Identifikationskarte und

Figur 2   zeigt eine Aufsicht auf die Identifikationskarte.

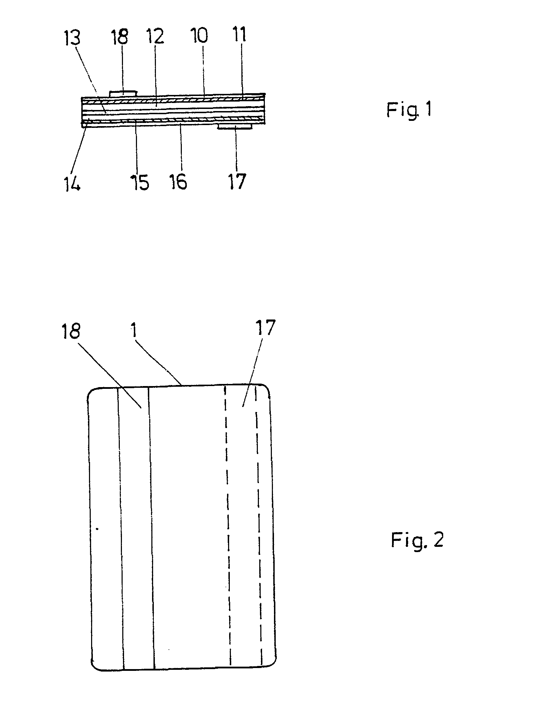

Die bewährten Identifikationskarten 1 gemäß Figur 1 weisen eine innere als Informationsträger dienende Wertpapierschicht o.dgl. auf, die beidseitig mit einer schützenden transparenten Kunststoffschicht 12, 14 aus Hart-PVC-Folie oder PVCA-Folie, in der Regel einer Dicke von ca. o,o75 bis o,35 mm laminiert ist. Erfindungsgemäß ist nun zum Schutz dieser Kunststoffschichten 12, 14 eine fluorhaltige thermoplastische Kunststoffschicht 1o, 16 vorzugsweise unter Verwendung eines Haftvermittlers 11, 15 auf die Kunststoffschichten 12, 14 kaschiert. Diese fluorhaltige Kunststoffschicht, beispielsweise ein Polyvinylfluoridfilm hat nur eine sehr geringe Dicke, in der Regel zwischen o,olo bis o,o25 mm. Diese  Schutzschicht 1o, 16 schützt die Kunststoffschichten vor Weichmachereinwanderung und den beim vielfachen Gebrauch auftretenden Berührungen mit Handschweiß und ähnlichen aggressiven Medien, die zu einer Trübung der transparenten Kunststoffschichten 12, 14 zu Spannungsrissen in denselben usw. führen würden. Auf diese Weise wird die Lebensdauer der Identifikationskarte wesentlich verlängert, da ihre Gebrauchstüchtigkeit voll erhalten bleibt. Je nach Ausrüstung ist die Identifikationskarte 1 noch zusätzlich mit einem papierenen Unterschriftenfeld 18 versehen, das unter Verwendung des gleichen Haftvermittlers wie die Haftvermittlerschichten 11, 15 mit den fluorhaltigen Kunststoffdeckschichten 1o mit derselben verbunden ist. Das gleiche gilt für einen außenseitig aufzubringenden Magnetstreifen 17. Die Figur 2 zeigt schematisch eine Aufsicht auf eine Identifikationskarte 1 mit Unterschriftenfeld 18 und unterseitigem Magentstreifen 17.

Patentansprüche
_____

1. Identifikationskarte aus Kunststoff oder kunststofflaminiertem Werkstoff, wobei der Kunststoff Polyvinylchlorid-hart und/oder weichmacherfreie Vinylchlorid-
Vinylacetat-Copolymere sind, die ggf. einen Magnetstreifen, Öffnungen in der Kunststoffschicht bzw.
ein papierenes Unterschriftenfeld aufweist,
g e k e n n z e i c h n e t   d u r c h   eine auf die
Außenflächen des Kunststoffes aufgebrachte fluorhaltige thermoplastische Kunststoffschicht einer Dicke
von 1o bis 5o $\mu$m, vorzugsweise 1o bis 25 $\mu$m.

2. Identifikationskarte nach Anspruch 1, dadurch gekennzeichnet, daß als fluorhaltiger Kunststoff Polyvinylfluorid verwendet ist.

3. Identifikationskarte nach Anspruch 1, dadurch gekennzeichnet, daß als fluorhaltiger Kunststoff Polyvinylidenfluorid verwendet ist.

4. Identifikationskarte nach einem der Ansprüche 1 bis 3,
dadurch gekennzeichnet, daß die fluorhaltige Kunststoffschicht als Film ausgebildet und mittels einer haftvermittelnden
Klebeschicht auf Basis      von           Acrylatharzen
mit dem Kunststoff vollflächig haftfest verbunden ist.

5. Identifikationskarte nach einem der Ansprüche 1 bis 4,
dadurch gekennzeichnet, daß auf die fluorhaltige Kunststoffschicht aufzubringende Teile wie Magnetstreifen,
papierenes Unterschriftenfeld, unter Verwendung des
gleichen Haftvermittlers der für das Aufbringen der
fluorhaltigen Kunststoffschicht verwendet wird, mit
derselben haftfest verbunden sind.

Fig. 1

Fig. 2

Dynamit Nobel Aktiengesellschaft, Troisdorf